# EUROPÄISCHE PATENTSCHRIFT

(11) **EP 4 051 843 B1**
(45) Veröffentlichungstag und Bekanntmachung des Hinweises auf die Patenterteilung: **27.12.2023**
(21) Anmeldenummer: 20785968.7
(22) Anmeldetag: 01.10.2020
(51) Int. Cl.: E04B 1/19, E04B 2/96, B62D 27/02, F16B 7/18, B33Y 80/00, E04B 2/88, F16B 7/00

(54) **VERFAHREN ZUR HERSTELLUNG EINES VERBINDUNGSKÖRPERS EINES VERBINDUNGSELEMENTS FÜR EINE PFOSTEN-RIEGEL- ODER STABKONSTRUKTION**
METHOD FOR THE PRODUCTION OF A CONNECTING BODY OF A CONNECTING ELEMENT FOR A POST-AND-BEAM OR BAR CONSTRUCTION
PROCÉDÉ DE FABRICATION D'UN CORPS D'ASSEMBLAGE D'UN ÉLÉMENT D'ASSEMBLAGE POUR UNE CONSTRUCTION DE POTEAUX-TRAVERSES OU DE BARRES

(30) Priorität: 30.10.2019 DE 102019129283
(43) Veröffentlichungstag der Anmeldung: 07.09.2022
(73) Patentinhaber: Lithium Designers GmbH, 60594 Frankfurt am Main (DE)
(72) Erfinder: MOHSEN, Alamir, 60599 Frankfurt am Main (DE); STRAUSS, Holger, 68723 Schwetzingen (DE)
(74) Vertreter: Meissner Bolte Partnerschaft mbB
(86) Internationale Anmeldenummer: PCT/EP2020/077563
(87) Internationale Veröffentlichungsnummer: WO 2021/083605

(56) Entgegenhaltungen:
- WO-A1-2010/009741
- DE-U1-202016 004 572
- DE-U1-202017 105 474
- US-A- 5 265 395
- KNAACK ET AL: "3D-Druck im Fassadenbau: Bessere Fassaden aus dem Drucker?", GLASWELT: DEUTSCHE GLASERZEITUNG, GENTNER VERLAG, STUTTGART, DE , no. 4 13 April 2018 (2018-04-13), pages 20-21, XP009540262, ISSN: 0017-1107 Retrieved from the Internet: URL:https://www.glaswelt.de/fassadenbau/fa ssadenbau-3d-druck-im-fassadenbau-bessere- fassaden-aus-dem-drucker
- Prayudhi Bayu: "3F3D: Form Follows Force with 3D printing", https://repository.tudelft.nl/islandora/ob ject/uuid:b068f81c-1561-4733-a07d-05e60368 184b?collection=education, 30 June 2016 (2016-06-30), pages 1-168, XP055982555, https://repository.tudelft.nl/islandora/ob ject/uuid:b068f81c-1561-4733-a07d-05e60368 184b?collection=education Retrieved from the Internet: URL:https://repository.tudelft.nl/islandor a/object/uuid:b068f81c-1561-4733-a07d-05e6 0368184b?collection=education [retrieved on 2022-11-17]

## Beschreibung

Die vorliegende Erfindung betrifft ein Verfahren zur Herstellung eines Verbindungskörpers eines Verbindungselements für eine Pfosten-Riegel- oder Stabkonstruktion eines Fassadensystems, wobei die Verbindungselemente insbesondere als Verbindungsknoten ausgeführt sein können.

Eine Pfosten-Riegel- oder Stabkonstruktion ist eine Konstruktionsmethode für Fassaden, mit der sich äußerst filigrane Glasfassaden herstellen lassen. Hierbei erfolgt bei Pfosten-Riegel-Konstruktionen der Lastabtrag über die senkrechten Pfosten, an welche die horizontalen Riegel angeschlossen sind. Gehalten werden die Füllungselemente des Fassadensystems durch horizontale und vertikale Pressleisten, die auf die Pfosten oder Riegel der Pfosten-Riegel-Konstruktion geschraubt werden. Als tragende Materialien kommen derzeit insbesondere Stahl und Aluminium oder aber auch Holz zum Einsatz.

Standard Pfosten-Riegel-Fassadensysteme sind seit vielen Jahren im Markt eingeführt und akzeptiert. Diese Systeme haben einen langen Prozess der Erprobung und Entwicklung durchlaufen, in welchem sie zu etablierten Produkten entwickelt wurden.

Eine Limitierung der derzeit bekannten Pfosten-Riegel-Fassadensysteme zeigt sich, wenn die Komplexität eines vorgeschlagenen Designs oder einer vorgeschlagenen Gebäudegeometrie vorgegebene Systemgrenzen überschreitet. Dies liegt insbesondere daran, dass bei Standard-Pfosten-Riegel-Fassadensysteme die Verbindungspunkte (Verbindungsknoten), über welche die einzelnen Pfosten- und Riegelelemente miteinander verbunden werden, auf einen bestimmten vorab festgelegten Winkelbereich beschränkt sind, mit welchem Verformungen aus orthogonalen, planaren Ebenen aufgenommen werden können.

Mit der wachsenden Komplexität der architektonischen Geometrien besteht ein zunehmender Bedarf insbesondere nach Verbindungselementen, mit denen auch komplexe Fassaden- und Gebäudehüllen realisiert werden können.

Die Masterarbeit von Prayudhi Bayu mit dem Titel "3F3D: Form Follows Force with 3D printing" (3F3D: Form folgt Kraft beim 3D-Drucken) stellt ein gattungsgemäßes Verfahren vor.

Ausgehend von dieser Problemstellung liegt somit der vorliegenden Erfindung die Aufgabe zu Grunde, ein Verbindungselement, insbesondere für eine Pfosten-Riegel- oder Stabkonstruktion eines Fassadensystems anzugeben, wobei das Verbindungselement nicht wie die Verbindungselemente bei Standard-Pfosten-Riegel-Fassadensysteme auf einen bestimmten Winkelbereich beschränkt ist, mit welchem Verformungen aus orthogonalen, planaren Ebenen aufgenommen werden können.

Eine weitere der Erfindung zu Grunde liegende Aufgabe ist darin zu sehen, eine Fassadenkonstruktion mit mehreren Stabelementen anzugeben, wobei mit der Stabkonstruktion auch komplexe Gebäudegeometrien nachbildbar sind.

Schließlich liegt der Erfindung die Aufgabe zu Grunde, ein Verfahren zur Herstellung eines Verbindungselements für eine Pfosten-Riegel- oder Stabkonstruktion eines Fassadensystems anzugeben, wobei sich das Verbindungselement insbesondere als Verbindungsknoten auch bei komplexen Gebäudegeometrien einsetzbar ist und wobei mit Hilfe des Verfahrens ein optimiertes Verbindungselement realisierbar ist, welches sich stets den geänderten Geometrien und Lasten einer Gebäudefassade anpasst.

Im Hinblick auf das Verfahren die der Erfindung zu Grunde liegende Aufgabe wird durch den Gegenstand des nebengeordneten Patentanspruchs 1 gelöst. Vorteilhafte Weiterbildungen des erfindungsgemäßen Verfahrens sind in den entsprechenden Unteransprüchen angegeben.

Es wird ein als Verbindungsknoten einsetzbares Verbindungselement für eine Pfosten-Riegel- oder Stabkonstruktion eines Fassadensystems offenbart, wobei das Verbindungselement einen mit einem additiven bzw. generativen Fertigungsverfahren für Metalle gefertigten Verbindungskörper aufweist, welcher durch eine Vielzahl von jeweils unterschiedlichen, dreidimensional gekrümmten Bereichen gebildet wird.

Durch das Vorsehen eines entsprechenden Verbindungskörpers, welcher durch eine Vielzahl von jeweils unterschiedlichen, dreidimensional gekrümmten Bereichen gebildet wird, sind diverse Vorteile realisierbar. Insbesondere ist auf diese Weise ein Topologie-optimiertes Verbindungselement realisierbar, welches nicht mehr auf einen bestimmten Winkelbereich beschränkt ist, mit welchem Verformungen aus orthogonalen, planaren Ebenen aufgenommen werden können.

Auf diese Weise ist mit Hilfe des Verbindungssystems die Erweiterung dieses Winkelbereichs bei der Verwendung von Bauteilen aus dem Standard-Fassadensystem (insbesondere bei der Verwendung von standardisierten Pfosten- und/oder Riegelelementen) deutlich komplexere Geometrien durch das optimierte Verbindungselement realisierbar, da das Verbindungselement sich stets den geänderten Geometrien und Lasten der Fassade anpasst.

Zur Fertigung des komplexen Verbindungskörpers des Verbindungselements kommt ein additives bzw. generatives Fertigungsverfahren für Metalle zum Einsatz. Insbesondere wird der Verbindungskörper des Verbindungselements mit einem additiven bzw. generativen Fertigungsverfahren für Metalle aus formlosen oder formneutralen Materialien ohne Einsatz spezieller Werkzeuge und auf Grundlage von Computerdatensätzen hergestellt.

Als Grundlage für das additive bzw. generative Fertigungsverfahren für Metalle dient ein Konstruktionsprozess, der auf einer parametrischen Planungsmethode basiert. Die im Rahmen der parametrischen Planungsmethode generierten Daten können über eine Schnittstelle, beispielsweise eine STL-Schnittstelle, an das entsprechende Gerät zur generativen Fertigung des parametrisch geplanten Verbindungskörpers übermittelt werden.

Als generative bzw. additive Fertigungsverfahren kommen insbesondere alle Verfahren mit dem Ausgangsmaterial Metall in Frage. Dies sind beispielsweise das Selektive Lasersintern (SLS), das Electron Beam Melting (EBM), das Direct Metal Laser Sintering (DMLS), das Selective Laser Melting (SLM), u.a.

Das Verbindungselement ist somit ein veränderliches, Geometrie-optimiertes, Material-optimiertes, Last-optimiertes und Fertigungs-optimiertes Bauteil, welches für komplexe Fassadengeometrien virtuell erstellt und als Herstellungsdatei an die gewählte Maschine zur generativen Herstellung übergeben wird und in ein direkt verwendbares Fassadenbauteil materialisiert wird.

Dabei kombiniert das Verbindungselement eine auf den Planungsprozess optimierte Software, eine auf den Herstellungsprozess optimierte Geometrie-Generation und eine virtuelle Simulation für die Zulassungsfähigkeit im Bauwesen (in Abhängigkeit des jeweiligen Herstellungsprozesses und Herstellungsmaterials).

Derzeit sind keine Verbindungselemente dieser Art bekannt oder gar verfügbar. Alle aus dem Stand der Technik bekannten Ansätze, bei denen Verbindungselemente mit unterschiedlichen Fertigungsmethoden hergestellt werden, müssen für jede Anwendung des Verbindungselements individuell geplant und angefertigt werden. Derartige Verbindungselemente bzw. Ansätze sind in der Regel erst wirtschaftlich durch eine Massenproduktion gleicher Bauteile, was jedoch dem Gedanken der komplexen Geometrie widerspricht. Häufig eingesetzt werden hier subtraktive CNC-Bearbeitungsprozesse oder Gussverfahren. Die verfügbaren Verfahren ermöglichen es aber nicht, jedes Bauteil (Verbindungselement) unterschiedlich und dabei wirtschaftlich herzustellen, was für ein Material-optimiertes, Last-optimiertes und Fertigungs-optimiertes Bauteil (Verbindungselement) unerlässlich ist.

Mit dem Verbindungselement werden die eingangs beschriebenen und bei Standard-Pfosten-Riegel-Fassadensysteme auftretenden Limitierungen gelöst, und erstmalig ein aus Metall generativ bzw. additiv hergestelltes Verbindungselement als Ergänzung zu den derzeit auf dem Markt verfügbaren Standard-Pfosten-Riegel-Systemen zulassungsfähig angeboten.

Im Hinblick auf das erfindungsgemäße Verfahren zur Herstellung eines solchen Verbindungselements ist anzumerken, dass softwarebasierend das als Fassadenknoten dienende Verbindungselement bzw. zumindest ein Verbindungskörper des als Fassadenknoten dienenden Verbindungselements simuliert und generiert, wobei dies vorzugsweise digital automatisiert stattfindet, wobei im Anschluss daran mit Hilfe der bei der Generierung und Simulation des Verbindungselements erzeugten Datensatzes das Verbindungselement mittels eines geeigneten und additiven bzw. generativen Fertigungsverfahres für Metalle automatisiert hergestellt wird.

Zur Generierung und Simulation kommt vorzugsweise ein softwarebasiertes parametrisiertes Verfahren zum Einsatz.

Das Verbindungselement ist für die Verbindung mit handelsüblichen Pfosten-Riegel-Fassadensystemen und insbesondere mit Pfosten- und Riegelelementen von handelsüblichen Pfosten-Riegel-Fassadensystemen ausgelegt, jedoch nicht auf ein bestimmtes System-Produkt limitiert. Durch eine parametrische Anpassung des Grund-Bauteils des Verbindungselements und insbesondere durch parametrische Anpassungen des Verbindungskörpers des Verbindungselements an Anforderungen aus dem Fassadensystem, wie beispielsweise Glasdicken, Dichtungssysteme, Profilgeometrien, etc., ist die Realisierung komplexer Geometrien möglich.

Der Vorteil bei der Kombination von Bauteilen aus den Standard-Fassadensystemen mit additiv bzw. generativ gefertigten Metallbauteilen ist die Verwendbarkeit der meisten Standard-Zubehörteile, wie beispielsweise Dichtungsprofile, Befestigungsmittel, Press- und Abdeckprofile, etc. Die Anpassung des jeweiligen generativ gefertigten und Topologie-optimierten Verbindungselements erfolgt für die unterschiedlichen Fassaden, die am Markt verfügbar sind. Hierbei werden beispielsweise die benötigten Schraubkanäle, Dichtungskanäle, Entwässerungskanäle und Verbindungselemente aus dem Standard-Fassadensystem digital auf das generativ gefertigte, Topologie-optimierte Verbindungselement aufmodeliert und somit die Kompatibilität sichergestellt.

Die Geometrie des Verbindungselements wird parametrisch erzeugt. Diese Parameter definieren das geometrische Verhältnis zwischen den zu verbindenden Fassadenprofilen. Das virtuelle Verbindungselement besteht insbesondere aus verschiedenen Bereichen, nämlich einer Außenseite mit den Verbindungen zu den Fassaden-Profilen. Dieser Bereich wird als "Non-Design-Space" bezeichnet.

Ein weiterer Bereich, aus welchem das virtuelle Verbindungselement besteht, wird als "Design-Space" bezeichnet.

Während der erste Bereich, der "Non-Design-Space", für die Kontinuität beispielsweise der Entwässerungsrinnen, der Dichtungsrinnen und des Schraubenkanals verantwortlich ist, und dem gewählten Fassadensystem angepasst wird, enthält der zweite Bereich, der "Design-Space"-Bereich, das Volumen, das zur Gewichts- und Kostenreduzierung optimiert werden kann. Hier optimiert das softwarebasierte Verfahren mit Hilfe von Algorithmen, auf der Grundlage der anzunehmenden Lasten aus der Fassade, die Geometrie des zweiten Bereichs des virtuellen Verbindungselements (d.h., des "Design-Space"-Bereichs).

Wie bereits angedeutet, ist der erste Bereich des virtuellen Verbindungselements, d.h. der "Non-Design-Space"-Bereich, für die Kontinuität beispielsweise der Entwässerungsrinnen, der Dichtungsrinnen und des Schraubenkanals verantwortlich und wird dem gewählten Fassadensystem angepasst. Dabei ermöglicht es eine parametrische Generierung, das Verbindungselement an eine Vielzahl von geometrischen Neigungen aus den anliegenden Fassadenflächen anzupassen. Dies erzeugt eine nahtlose Verbindung zwischen den Profilen, was mit den herkömmlichen Fassadensystemen aufgrund der komplexen Schnitte der Profile bei nicht regelmäßigen Oberflächenneigungen und Verbindungen geometrisch unmöglich ist.

Das fertig generierte digitale Modell des Verbindungselements ist als Bauteil direkt zur additiven bzw. generativen Herstellung bereit und kann nach der Herstellung direkt in der Fassade eingesetzt werden. Eine Nachbehandlung ist hierbei jedoch nicht ausgeschlossen (z.B. Oberflächenbehandlung, metallurgische Nachbehandlung, etc.).

Die oben beschriebene digitale Planung ermöglicht die realistische Abbildung genauer Materialparameter aus dem gewählten additiven bzw. generativen Fertigungsverfahren für Metalle in der virtuellen Abbildung des Bauteils. Eine Optimierung wird bezüglich der notwendigen Kraftverläufe im Bauteil und bezüglich der optimierten Herstellung auf dem jeweiligen additiven bzw. generativen Fertigungsgerät erzielt. Das Produkt ist dann auf den Materialverbrauch und für die einwirkenden Lasten optimiert. Der Abgleich mit den hinterlegten Materialeigenschaften (E-Modul, Festigkeiten, etc.) ermöglicht den notwendigen Nachweis für die Erlangung einer Zulassung im Einzelfall für den Baubereich, und insbesondere ohne die Notwendigkeit von Bruchtests für jedes Bauteil.

Gemäß Realisierungen des Verbindungselements, welches den mit einem additiven bzw. generativen Fertigungsverfahren für Metalle gefertigten Verbindungskörper aufweist, welcher durch eine Vielzahl von jeweils unterschiedlichen, dreidimensional gekrümmten Bereichen gebildet wird, ist vorgesehen, dass die dreidimensional gekrümmten Bereiche des Verbindungskörpers entlang zuvor berechneter Kraftflussvektoren verlaufen, wobei die Kraftflussvektoren einer auf das Verbindungselement einwirkenden Belastung in einem in der Pfosten-Riegel- oder Stabkonstruktion integrierten Zustand des Verbindungselements entsprechen.

Insbesondere verlaufen die dreidimensional gekrümmten Bereiche ausschließlich im Bereich der berechneten Kraftflussvektoren, um auf diese Weise ein Gewichts- und Material-optimiertes Verbindungselement zu schaffen.

Gemäß Realisierungen des Verbindungselements ist vorgesehen, dass die dreidimensional gekrümmten Bereiche des generativ oder additiv gefertigten Verbindungskörpers vorzugsweise stab-, streben- oder astförmig und noch bevorzugter zumindest bereichs- oder abschnittsweise zumindest im Wesentlichen stab-, streben- oder astförmig ausgebildet sind. Es ist vorgesehen, dass die dreidimensional gekrümmten Bereiche zumindest bereichs- oder abschnittsweise unterschiedliche Materialdicken und/oder Materialdichten aufweisen. Die Materialdicken und/oder Materialdichten sind/ist gemäß Ausführungsformen der Erfindung entsprechend einer berechneten punktuellen oder bereichsweisen Belastung des Verbindungselements in einem in der Pfosten-Riegel- oder Stabkonstruktion integrierten Zustand des Verbindungselements gewählt. Insbesondere die Bereiche des Verbindungskörpers des Verbindungselements, die in einem Zustand, wenn das Verbindungselement in der Fassadenkonstruktion integriert ist, einer hohen Stressbelastung ausgesetzt sind, weisen eine größere Materialdicke und/oder Materialdichte als Bereiche des Verbindungselements, die in einem Zustand, wenn das Verbindungselement in der Fassadenkonstruktion integriert ist, einer geringen bzw. geringeren Stressbelastung ausgesetzt sind.

Die unterschiedliche Materialdichteverteilung in dem Verbindungskörper des Verbindungselements kann zusätzlich oder alternativ dadurch erreicht werden, dass ein und dasselbe Material punktuell oder bereichsweise aufgetragen wird.

Bei den additiven bzw. generativen Fertigungsverfahren für Metalle handelt es sich um ein 3D-Druck-Verfahren, wie z.B. ein Pulverbettverfahren, ein Freiraumverfahren oder ein anderes Schichtbauverfahren. Bekannte Pulverbettverfahren sind beispielsweise selektives Laserschmelzen, selektives Lasersintern, Selective Heatsintering, Binder Jetting oder Elektronenstrahlschmelzen. Diese Aufzählung ist selbstverständlich nicht abschließend.

Wie bereits ausgeführt, kommen in der Entwurfsphase des Verbindungselements parametrische Planungsmethoden zum Einsatz. Hierbei handelt es sich um Planungsmethoden, bei denen Entwürfe des Verbindungselements nach eigens gestellten Parametern optimiert werden können. Das parametrische Planen beruht auf dem System, dass alle Elemente des Verbindungskörpers durch Parameter festgelegt sind und so aufeinander reagieren können. Durch die miteinander verknüpften Parameter führt jede einzelne Veränderung zu Veränderungen an anderen Stellen des Entwurfs. Es werden alle fassaden- oder verbindungselementrelevanten Daten eingegeben und miteinander verbunden, so dass daraus ein intelligentes 3D-Modell des Verbindungselements entsteht. Aufgrund der parametrischen Planungsmethoden werden bei dem Verbindungselement bzw. Verbindungskörper strenge geometrische Körper, wie Rechteck, Dreieck und Kreis, vermieden, genauso wie die Wiederholung und Aneinanderreihung von unverbundenen Elementen. Die dreidimensional gekrümmten Bereiche des Verbindungskörpers des Verbindungselements sind als parametrisch verformbar anzusehen.

Von daher ist gemäß des erfindungsgemäßen Verfahrens vorgesehen, dass die dreidimensional gekrümmten Bereiche des Verbindungskörpers parametrisch definiert sind. Dies gilt im Hinblick auf eine Krümmung der dreidimensional gekrümmten Bereiche, im Hinblick auf eine dreidimensionale Ausrichtung der dreidimensional gekrümmten Bereiche, im Hinblick auf eine Anzahl der dreidimensional gekrümmten Bereiche und im Hinblick auf die Ausrichtung der dreidimensional gekrümmten Bereiche. Auch sind die Materialdicken und/oder Materialdichten der dreidimensional gekrümmten Bereiche parametrisch definiert.

Gemäß Realisierungen des Verbindungselements ist vorgesehen, dass das Verbindungselement mindestens zwei voneinander getrennt ausgeführte und jeweils in dem Verbindungskörper integrierte Schnittstellenbereiche aufweist, über welche Stabelemente der Stabkonstruktion oder Pfosten- und/oder Riegelelemente der Pfosten-Riegel-Konstruktion miteinander verbindbar sind. Die dreidimensional gekrümmten Bereiche sind dabei vorzugsweise stab-, streben- oder astförmig und noch bevorzugter zumindest bereichs- oder abschnittsweise zumindest im Wesentlichen stab-, streben- oder astförmig ausgebildet, wobei die Querschnittsfläche von zumindest einem dreidimensional gekrümmten Bereich in Richtung der Schnittstellenbereiche zunimmt und/oder wobei die Materialdicke und/oder Materialdichte von zumindest einem dreidimensional gekrümmten Bereich in Richtung der Schnittstellenbereiche zunimmt. Auf diese Weise werden Kräfte, die über den Verbindungskörper übertragen werden, beim Einleiten in den Schnittstellenbereich entsprechend aufgefächert und es werden somit wirksam Kraftspitzen vermieden.

Die Offenbarung betrifft ferner eine Fassadenkonstruktion mit mindestens einem Pfostenelement und mindestens einem Riegelelement, wobei das mindestens eine Pfostenelement über ein Verbindungselement der Art mit dem mindestens einem Riegelelement verbunden ist.

In diesem Zusammenhang ist darauf hinzuweisen, dass der Begriff "Pfostenelement", sofern er hierin im Zusammenhang mit dem Verbindungselement genannt wird, nicht als zwangsläufig ein vertikal ausgerichtetes Element zu verstehen ist. Gleiches gilt im übertragenen Sinne für den im Zusammenhang mit dem Verbindungselement verwendeten Begriff "Riegelelement", was nicht zwangsläufig bedeutet, dass dieses Element horizontal verlaufen muss. Die Begriffe "Pfostenelement" und "Riegelelement" werden nur deshalb nach wie vor im Zusammenhang mit dem erfindungsgemäßen Verbindungselement verwendet, da es sich hierbei um Elemente einer Standard-Pfosten-Riegel- oder Stabkonstruktion handeln kann.

Gemäß einem weiteren Aspekt betrifft die vorliegende Offenbarung somit auch eine Fassadenkonstruktion mit mindestens einem ersten und einem zweiten Stabelement, wobei das mindestens eine erste Stabelement über ein Verbindungselement der Art mit dem mindestens einem zweiten Stabelement verbunden ist.

Die Erfindung wird nachfolgend unter Bezugnahme auf die beiliegenden Zeichnungen anhand von exemplarischen Ausführungsformen des erfindungsgemäßen Verbindungselements näher beschrieben.

Es zeigen:
- FIG. 1a: schematisch und in einer isometrischen Ansicht die Vorderseite einer ersten exemplarischen Realisierung eines Verbindungselements;

- FIG. 1b: schematisch und in einer isometrischen Ansicht die Rückseite der ersten exemplarischen Realisierung des Verbindungselements gemäß FIG. 1a;
- FIG. 2a: schematisch und in einer isometrischen Ansicht die Vorderseite einer zweiten exemplarischen Realisierung des Verbindungselements;
- FIG. 2b: schematisch und in einer isometrischen Ansicht die Rückseite der zweiten exemplarischen Realisierung des Verbindungselements gemäß FIG. 2a;
- FIG. 3a: schematisch und in einer isometrischen Ansicht die Vorderseite einer dritten exemplarischen Realisierung des Verbindungselements; und
- FIG. 3b: schematisch und in einer isometrischen Ansicht die Rückseite der dritten exemplarischen Realisierung des Verbindungselements gemäß FIG. 3a.

In der nachfolgenden Figurenbeschreibung werden gleiche Bezugszeichen für gleiche oder gleichwirkende Komponenten der unterschiedlichen Ausführungsformen verwendet.

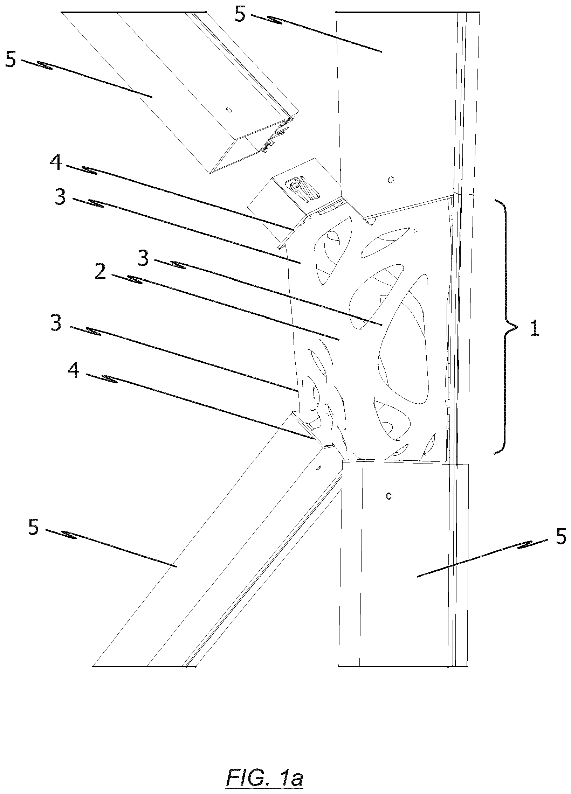

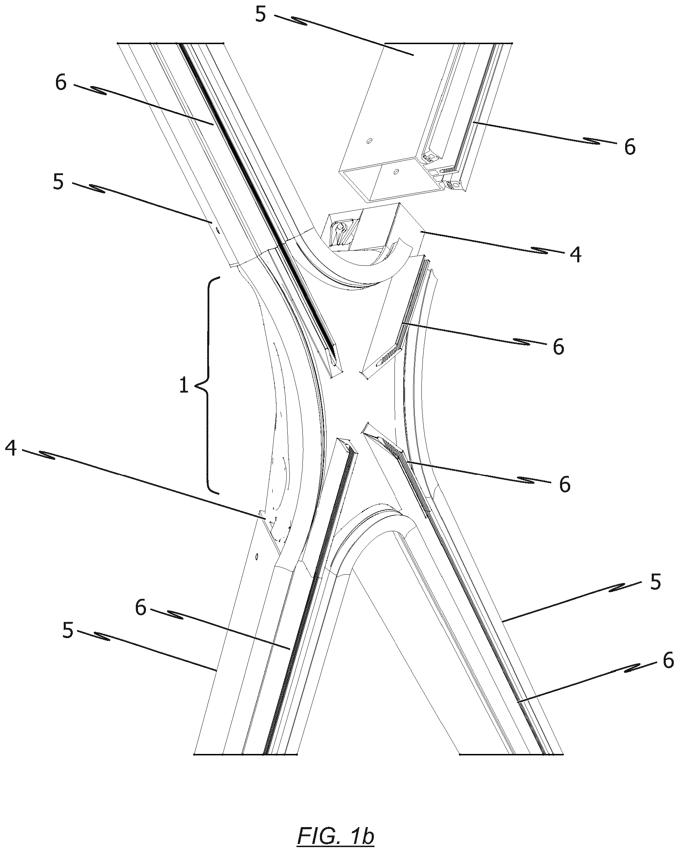

FIG. 1a und FIG. 1b zeigen jeweils schematisch und in einer isometrischen Ansicht die Vorder- und Rückseite eines Systems mit einem generativ erzeugten Verbindungselement 1, der integral mit einem vertikal verlaufenden Fassadenprofil ausgebildet ist und zwei Schnittstellenbereiche 4 zur Aufnahme bzw. Befestigung von entsprechenden Fassadenprofilen 5 aufweist. In dem gezeigten Ausführungsbeispiel ist der Verbindungskörper 2 des Verbindungselements 1 in einem einzigen Arbeitsgang generativ, beispielsweise mittels eines 3D-Druckverfahrens, hergestellt, und bildet daher einen Monolithen.

Der Verbindungskörper 2 weist eine Vielzahl von jeweils unterschiedlichen, dreidimensional gekrümmten Bereichen 3 auf. Diese dreidimensional gekrümmten Bereiche 3 verlaufen entlang zuvor berechneter Kraftflussvektoren.

Wie dargestellt, sind bei dem ersten Ausführungsbeispiel die dreidimensional gekrümmten Bereiche 3 des Verbindungskörpers 2 zumindest bereichsweise stab-, streben- oder astförmig ausgebildet und weisen zumindest bereichs- oder abschnittsweise unterschiedliche Materialdicken und/oder Materialdichten auf. Dabei sind die Materialdicken und/oder Materialdichten entsprechend einer berechneten punktuellen oder bereichsweisen Belastung des Verbindungselements 1 in einem in einer Fassadenkonstruktion integrierten Zustand des Verbindungselements 1 entsprechend gewählt.

Wie bereits ausgeführt, weist das Verbindungselement 1 gemäß der ersten exemplarischen Ausführungsform vier voneinander getrennt ausgeführte und jeweils in dem Verbindungskörper 2 integrierte Schnittstellenbereiche 4 auf, über welche Fassadenelemente 5, insbesondere Fassadenprofile der Fassadenkonstruktion miteinander verbindbar sind.

Bei der ersten exemplarischen Ausführungsform sind die Schnittstellenbereiche 4 des Verbindungskörpers 2 ausgebildet, die Fassadenprofile 5 aufzunehmen, in dem die Fassadenprofile 5 auf die Verbindungsbereiche zumindest bereichsweise gesteckt und dort entsprechend fixiert werden.

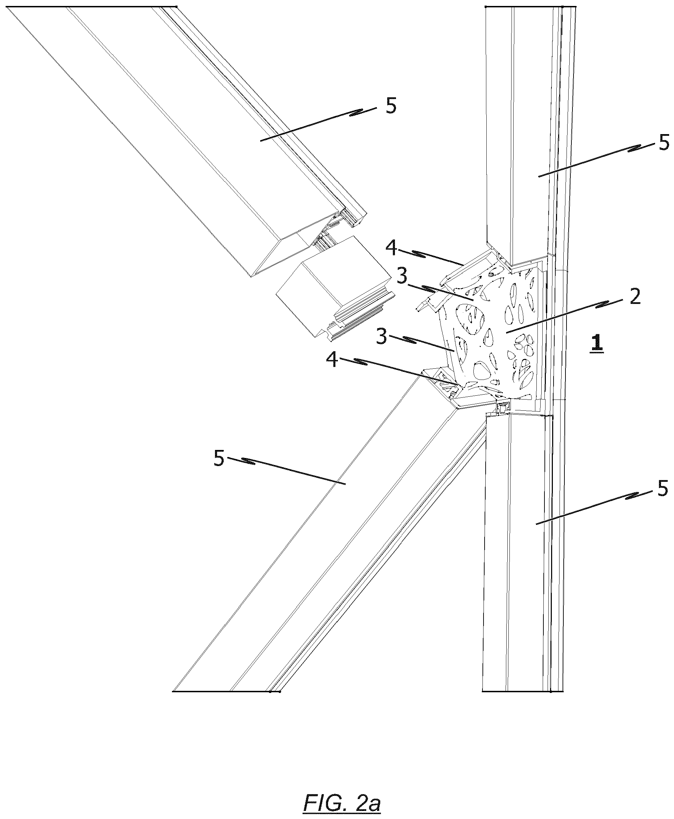

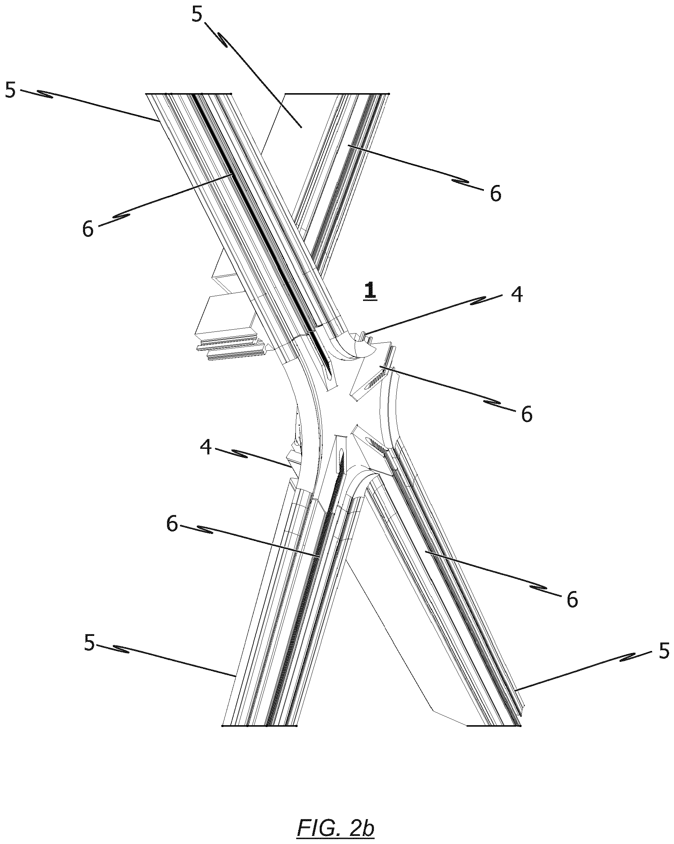

Bei der in FIG. 2a und FIG. 2b schematisch dargestellten Ausführungsform kommt ein ähnlicher Ansatz für die Verbindung der Fassadenprofile 5 mit dem Verbindungskörper 2 zum Einsatz, wobei allerdings hier eine Gleitverbindung zum Einsatz kommt, die formschlüssig mit den Schnittstellenbereichen des Verbindungskörpers 2 verbindbar ist und zur Aufnahme der Fassadenprofile 5 dient.

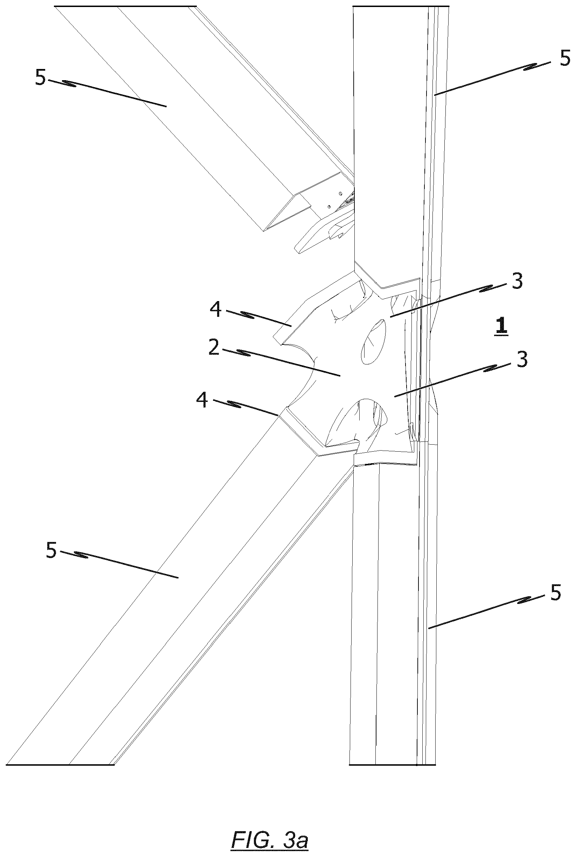

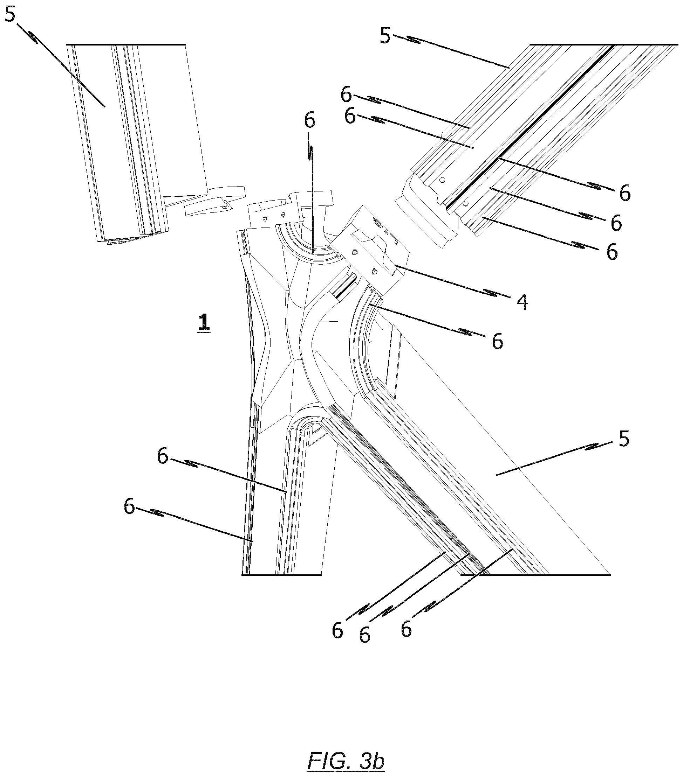

Bei der in FIG. 3a und FIG. 3b schematisch gezeigten exemplarischen Ausführungsform des erfindungsgemäßen Verbindungselements 1 kommt insbesondere eine Topologie-optimierte Lösung zum Einsatz, wobei die Verbindung mit den Fassadenprofilen 5 über eine Standard-Schiebeverbindung von der Außenseite des als Verbindungsknotens dienenden Verbindungselements 1 erfolgt.

Anhand der Rückansichten gemäß FIG. 1b, FIG. 2b und FIG 3b ist zu erkennen, dass bei dem erfindungsgemäßen Verfahren zur Herstellung eines Verbindungskörpers eines Verbindungselements 1 die Entwässerungs- bzw. Dichtungsrinnen 6 der an dem Verbindungselement 1 angeschlossenen Fassadenprofile 5 kontinuierlich in dem Verbindungselement weitergeführt werden.

Die Erfindung ist nicht auf die in den Zeichnungen gezeigten Ausführungsformen beschränkt, sondern ergibt sich aus einer Zusammenschau sämtlicher hierin offenbarter Merkmale innerhalb des Schutzbereichs der beigefügten Ansprüche

### BEZUGSZEICHENLISTE

- 1: Verbindungselement
- 2: Verbindungskörper
- 3: dreidimensional gekrümmter Bereich
- 4: Schnittstellenbereich
- 5: Fassadenprofil
- 6: Entwässerungs- bzw. Dichtungsrinne

## Patentansprüche

1. Verfahren zur Herstellung eines Verbindungskörpers (2) eines Verbindungselements (1) für eine Pfosten-Riegel- oder Stabkonstruktion eines Fassadensystems, wobei der Verbindungskörper (2) parametrisch entworfen und durch eine Vielzahl von jeweils unterschiedlichen, dreidimensional gekrümmten Bereichen (3) gebildet wird, wobei die dreidimensional gekrümmten Bereiche (3) stab-, streben- oder astförmig ausgebildet sind und zumindest bereichs- oder abschnittsweise unterschiedliche Materialdicken und/oder Materialdichten aufweisen, wobei bei dem Verfahren:
- die Materialdicken und/oder Materialdichten entsprechend einer berechneten, punktuellen oder bereichsweisen Belastung des Verbindungselements (1) in einem in der Pfosten-Riegel- oder Stabkonstruktion integrierten Zustand des Verbindungselements (1) gewählt werden,
- die dreidimensional gekrümmten Bereiche (3) im Hinblick auf eine Krümmung, im Hinblick auf eine dreidimensionale Ausrichtung und im Hinblick auf eine Anzahl parametrisch definiert und an insbesondere berechneten und/oder vorab festgelegten Anforderungen aus der Pfosten-Riegel- oder Stabkonstruktion oder an insbesondere berechneten und/oder vorab festgelegten Anforderungen aus dem Fassadensystem, welches Teil der Pfosten-Riegel- oder Stabkonstruktion ist, parametrisch angepasst werden, und
- anschließend der Verbindungskörper (2) mit einem generativen Fertigungsverfahren für Metalle gefertigt wird,
wobei der Verbindungskörper (2) des Verbindungselements (1) an Anforderungen aus dem Fassadensystem parametrisch angepasst ist, so dass Entwässerungs- und/oder Dichtungsrinnen (6) aus dem Fassadensystem kontinuierlich in dem Verbindungselement (1) weitergeführt werden.

2. Verfahren nach Anspruch 1,
wobei die dreidimensional gekrümmten Bereiche (3) entlang zuvor berechneter Kraftflussvektoren verlaufen, wobei die Kraftflussvektoren einer auf das Verbindungselement (1) einwirkenden Belastung in einem in der Pfosten-Riegel- oder Stabkonstruktion integrierten Zustand des Verbindungselements (1) entsprechen.

3. Verfahren nach Anspruch 2,
wobei die dreidimensional gekrümmten Bereiche (3) ausschließlich im Bereich der berechneten Kraftflussvektoren verlaufen.

4. Verfahren nach einem der Ansprüche 1 bis 3,
wobei eine Krümmung der dreidimensional gekrümmten Bereiche (3), eine dreidimensionale Ausrichtung der dreidimensional gekrümmten Bereiche (3), eine Anzahl der dreidimensional gekrümmten Bereiche (3) und/oder die Ausrichtung der dreidimensional gekrümmten Bereiche (3) untereinander parametrisch definiert werden/wird.

5. Verfahren nach einem der Ansprüche 1 bis 4,
wobei die Materialdicken und/oder Materialdichten der dreidimensional gekrümmten Bereiche (3) parametrisch definiert werden/wird.

6. Verfahren nach einem der Ansprüche 1 bis 5,
wobei das Verbindungselement (1) mindestens zwei voneinander getrennt ausgeführte und jeweils in dem Verbindungskörper (2) integrierte Schnittstellenbereiche (4) aufweist, über welche Pfosten- und/oder Riegelelemente der Pfosten-Riegel-Konstruktion oder Stabelemente der Stabkonstruktion miteinander verbindbar sind.

7. Verfahren nach Anspruch 6,
wobei die dreidimensional gekrümmten Bereiche (3) vorzugsweise stab-, streben- oder astförmig und noch bevorzugter zumindest bereichs- oder abschnittsweise zumindest im Wesentlichen stab-, streben- oder astförmig ausgebildet werden, wobei die Querschnittsfläche von zumindest einem dreidimensional gekrümmten Bereich in Richtung der Schnittstellenbereiche (4) zunimmt und/oder wobei die Materialdicke und/oder Materialdichte von zumindest einem dreidimensional gekrümmten Bereich in Richtung der Schnittstellenbereiche (4) zunimmt.

8. Verfahren nach Anspruch 1,
wobei das Verfahren ferner den Verfahrensschritt des Integrierens von mindestens zwei Schnittstellenbereiche (4) in den Verbindungskörper (2) aufweist, wobei die Integration vorzugsweise generativ erfolgt.

9. Verfahren nach einem der Ansprüche 1 bis 8,
wobei der Verfahrensschritt des parametrischen Entwerfens folgendes aufweist:
- Prüfung einer Zulassungsfähigkeit des Verbindungskörpers durch virtuelle Simulation des Verbindungskörpers (2).

## Claims

1. A method for producing a connecting body (2) of a connecting element (1) for a mullion-transom or bar construction of a façade system, wherein the connecting body (2) is designed parametrically and is formed by a plurality of respectively different, three-dimensionally curved regions (3), wherein the three-dimensionally curved regions (3) are formed in the shape of rods, struts or branches and have different material thicknesses and/or material densities at least in regions or sections, wherein in the method:
- the material thicknesses and/or material densities are selected pursuant to a calculated point or area load of the connecting element (1) in a integrated state of the connecting element (1) in the mullion-transom or bar construction,
- the three-dimensionally curved regions (3) are defined parametrically with regard to a curvature, with regard to a three-dimensional orientation and with regard to a number and are adapted parametrically to in particular calculated and/or predetermined requirements from the mullion-transom or bar construction or to in particular calculated and/or predetermined requirements from the façade system which is part of the mullion-transom or bar construction, and
- the connecting body (2) is then manufactured using a generative manufacturing process for metals,
wherein the connecting body (2) of the connecting element (1) is parametrically adapted to requirements from the façade system, so that drainage and/or sealing channels (6) from the façade system continue on in the connecting element (1) in a continuous manner.

2. The method according to claim 1,
wherein the three-dimensionally curved regions (3) run along previously calculated force flow vectors, wherein the force flow vectors correspond to a load acting on the connecting element (1) in an integrated state of the connecting element (1) in the mullion-transom or bar construction.

3. The method according to claim 2,
wherein the three-dimensionally curved regions (3) extend exclusively in the region of the calculated force flow vectors.

4. The method according to any one of claims 1 to 3,
wherein a curvature of the three-dimensionally curved regions (3), a three-dimensional orientation of the three-dimensionally curved regions (3), a number of the three-dimensionally curved regions (3) and/or the orientation of the three-dimensionally curved regions (3) with respect to each other are/is defined parametrically.

5. The method according to any one of claims 1 to 4,
wherein the material thicknesses and/or material densities of the three-dimensionally curved regions (3) are/is defined parametrically.

6. The method according to any one of claims 1 to 5,
wherein the connecting element (1) has at least two interface regions (4) which are designed separately from one another and are each integrated in the connecting body (2) and via which mullion and/or transom elements of the mullion-transom construction or bar elements of the bar construction can be connected to one another.

7. The method according to claim 6,
wherein the three-dimensionally curved regions (3) are preferably rod-shaped, strut-shaped or branch-shaped and even more preferably at least in regions or sections at least substantially rod-shaped, strut-shaped or branch-shaped, wherein the cross-sectional area of at least one three-dimensionally curved region increases in the direction of the interface regions (4) and/or wherein the material thickness and/or material density of at least one three-dimensionally curved region increases in the direction of the interface regions (4).

8. The method according to claim 1,
wherein the method further comprises the method step of integrating at least two interface regions (4) into the connecting body (2), wherein the integration is preferably performed generatively.

9. The method according to any one of claims 1 to 8,
the method step of the parametric design comprising:
- verifying approvability of the connecting body by virtually simulating the connecting body (2).

## Revendications

1. Procédé de fabrication d'un corps d'assemblage (2) d'un élément d'assemblage (1) pour une construction de poteaux-traverses ou de barres d'un système de façade, le corps d'assemblage (2) étant de conception paramétrique et étant formé par une pluralité de zones (3) courbées en trois dimensions, respectivement différentes, les zones (3) courbées en trois dimensions étant réalisées en forme de barres, d'entretoises ou de branches et présentant au moins localement ou par endroits des épaisseurs de matériau et/ou des densités de matériau différentes, procédé dans lequel
- les épaisseurs de matériau et/ou les densités de matériau sont choisies en fonction d'une charge calculée, ponctuelle ou locale, de l'élément d'assemblage (1) dans un état de l'élément d'assemblage (1) intégré dans la construction de poteaux-traverses ou de barres,
- les zones (3) courbées en trois dimensions sont définies de manière paramétrique en ce qui concerne une courbure, en ce qui concerne une orientation tridimensionnelle et en ce qui concerne un nombre et sont adaptées de manière paramétrique à des exigences en particulier calculées et/ou prédéfinies provenant de la construction de poteaux-traverses ou de barres ou à des exigences en particulier calculées et/ou prédéfinies provenant du système de façade qui fait partie de la construction de poteaux-traverses ou de barres, et
- ensuite, le corps d'assemblage (2) est fabriqué par un procédé de fabrication additive pour métaux,
le corps d'assemblage (2) de l'élément d'assemblage (1) étant adapté de manière paramétrique aux exigences provenant du système de façade, de sorte que les gouttières de drainage et/ou d'étanchéité (6) provenant du système de façade continuent d'être menées dans l'élément d'assemblage (1).

2. Procédé selon la revendication 1,
dans lequel les zones (3) courbées en trois dimensions s'étendent le long de vecteurs de flux de force calculés au préalable, les vecteurs de flux de force correspondant à une charge qui agit sur l'élément d'assemblage (1) dans un état de l'élément d'assemblage (1) intégré dans la construction de poteaux-traverses ou de barres.

3. Procédé selon la revendication 2,
dans lequel les zones (3) courbées en trois dimensions s'étendent exclusivement dans la zone des vecteurs de flux de force calculés.

4. Procédé selon l'une des revendications 1 à 3,
dans lequel une courbure des zones (3) courbées en trois dimensions, une orientation tridimensionnelle des zones (3) courbées en trois dimensions, un nombre des zones (3) courbées en trois dimensions et/ou l'orientation des zones (3) courbées en trois dimensions entre elles sont/est défini(s) de manière paramétrique.

5. Procédé selon l'une des revendications 1 à 4,
dans lequel les épaisseurs de matériau et/ou les densités de matériau des zones (3) courbées en trois dimensions sont/est définie(s) de manière paramétrique.

6. Procédé selon l'une des revendications 1 à 5,
dans lequel l'élément d'assemblage (1) présente au moins deux zones d'interface (4) réalisées séparément l'une de l'autre et intégrées chacune dans le corps d'assemblage (2), par l'intermédiaire desquelles des éléments de poteau et/ou de traverse de la construction de poteaux-traverses ou des éléments de barre de la construction de barres peuvent être reliés entre eux.

7. Procédé selon la revendication 6,
dans lequel les zones (3) courbées en trois dimensions sont de préférence en forme de barres, d'entretoises ou de branches et, de préférence encore, au moins localement ou par endroits, au moins sensiblement en forme de barres, d'entretoises ou de branches, et
la surface de la section transversale d'au moins une zone courbée en trois dimensions augmente en direction des zones d'interface (4), et/ou l'épaisseur de matériau et/ou la densité de matériau d'au moins une zone courbée en trois dimensions augmente(nt) en direction des zones d'interface (4).

8. Procédé selon la revendication 1,
dans lequel le procédé comprend en outre l'étape de procédé consistant à intégrer au moins deux zones d'interface (4) dans le corps d'assemblage (2), ladite intégration étant de préférence réalisée de façon additive.

9. Procédé selon l'une des revendications 1 à 8,
dans lequel l'étape de procédé de conception paramétrique consiste à :
- vérifier l'admissibilité du corps d'assemblage par simulation virtuelle du corps d'assemblage (2).
